# EUROPEAN PATENT APPLICATION

(11) **EP 4 697 211 A1**
(43) Date of publication of application: **18.02.2026**
(21) Application number: 25190600.4
(22) Date of filing: 21.07.2025
(51) Int. Cl.: G06F 21/44, H04L 41/0894, H04L 9/40

(54) **METHOD, DEVICE, AND SYSTEM FOR CONTROLLING ACCESS TO SWITCH PORTS IN COMMUNICATION NETWORKS**

(30) Priority: 15.08.2024 IN 202411062005; 03.12.2024 GB 202417750
(71) Applicant: Cambium Networks Ltd, Ashburton, Devon TQ13 7UP (GB)
(72) Inventor: ATREYA, Vivek Lakshminarayana, 560003 Bangalore (IN); ANKAIAH, Shashi Hosakere, 560076 Bangalore (IN); MIRANDA, Trevor, 94133 San Francisco (US)
(74) Representative: EIP

(57) **Abstract**

A method, device, and system for controlling access to switch ports in communication networks is disclosed. The method may include receiving an authentication request associated with an end-device requesting access to a switch port of a switch within a communication network; comparing at least one device attribute associated with the end-device with an access policy associated with an access policy associated with the switch port; transmitting an authentication instruction associated with the end-device and the switch port to the switch based on a result of comparing. The authentication instruction comprises one of allowing the end-device access to the switch port based on the access policy and denying the end-device access to the switch port based on the access policy.

## Description

### Technical Field

The present disclosure relates generally to security in communication networks, and more specifically, but not exclusively, to a method, device, and system for controlling access to switch ports in communication networks.

### BACKGROUND

Switch ports of a switch within a network (for example, a Local Area Network (LAN)) provide network connectivity inside or outside the network to multiple devices, which may include servers, printers, or Access Points (APs). The APs further provide Wireless Fidelity (Wi-Fi) connectivity inside the network to other user devices, such as, laptops, gaming consoles, tablets, other smart devices, and Internet of Things (IoT) devices. To enable effective resource management and network security within the network, a network administrator may be required to set up policies to specify limited access for devices that are connected to the network through these APs.

Conventionally, switch ports are not configured to automatically restrict access to particular type, make, or brand of devices connected to the switch port. For example, switch ports cannot be locked to only APs, Access Switches, or IoT devices. As a result of this vulnerability, an end user may obtain uncontrolled access to the network by unplugging an approved device (for example, an AP) plugged into a switch port and replacing the approved device with an unauthorized device (for example, a gaming console).

In some conventional port security systems, in order to control such unauthorized access to a network via a switch port, a network administrator may designate a list of Media Access Control (MAC) addresses for end-devices that are allowed to connect to and pass traffic over a network via the switch. In such conventional systems, with increase in the number of devices, requirement of maintaining and updating extensive lists of MAC addresses for all the devices is required. This is not only time intensive, but also impractical and prone to errors, especially in dynamic and large-scale network environments. As a result, efficiency of these conventional systems decreases with increase in the number of devices that need to have access to switch ports.

It is an object of the disclosure to mitigate the problems of the prior art.

### BRIEF SUMMARY OF THE INVENTION

In accordance with a first aspect of the disclosure there is provided a method for controlling access to switch ports in communication networks. The method may include receiving, by a network device, an authentication request associated with an end-device requesting access to a switch port of a switch within a communication network. The method may further include comparing, by the network device, at least one device attribute associated with the end-device with an access policy associated with the switch port. The method may further include transmitting to the switch, by the network device, an authorization instruction associated with the end-device and the switch port, based on a result of the comparing. In an embodiment, the authorization instruction may include one of allowing the end-device access to the switch port based on the access policy and denying the end-device access to the switch port based on the access policy.

In accordance with a second aspect of the disclosure there is provided a network device. The network device may include a processor, and a memory communicably coupled to the processor and comprising processor instructions that when executed by the processor, cause the processor to receive an authentication request associated with an end-device requesting access to a switch port of a switch within a communication network. The processor may further compare at least one device attribute associated with the end-device with an access policy associated with the switch port. The processor may further transmit to the switch an authorization instruction associated with the end-device and the switch port, based on a result of the comparison. In an embodiment, the authorization instruction may include one of allowing the end-device access to the switch port based on the access policy and denying the end-device access to the switch port based on the access policy.

In accordance with a third aspect of the disclosure there is provided a system for controlling access to switch ports in communication networks. The system may include a set of switches in a communication network, wherein each of the set of switches may include a plurality of switch ports. The system may further include a gateway communicably coupled to the set of switches. The gateway may include a processor, and a memory communicably coupled to the processor and comprising processor instructions that when executed by the processor, cause the processor to receive an authentication request associated with an end-device requesting access to a switch port of a switch within a communication network. The processor may further compare at least one device attribute associated with the end-device with an access policy associated with the switch port. The processor may further transmit to the switch an authorization instruction associated with the end-device and the switch port, based on a result of the comparison. In an embodiment, the authorization instruction may include one of allowing the end-device access to the switch port based on the access policy and denying the end-device access to the switch port based on the access policy.

Further features of the disclosure will be apparent from the following description of preferred embodiments of the disclosure, which are given by way of example only.

### BRIEF DESCRIPTION OF THE DRAWINGS

The present application can be best understood by reference to the following description taken in conjunction with the accompanying drawing figures, in which like parts may be referred to by like numerals.
**FIG. 1** depicts a communication network where a system for controlling access to switch ports may be deployed;
**FIG. 2** depicts a network device configured to control access to switch ports in a communication network, in an embodiment of the disclosure;
**FIG. 3** depicts data stored in a sessions database and a device datastore within a communication network, in an embodiment of the disclosure;
**FIG. 4** is a flow diagram depicting communication flow between an end-device, a network switch, and a network device for controlling access to switch ports in a communication network, in an embodiment of the disclosure.
**FIG. 5** is a flow diagram depicting communication flow between an end-device, a network switch, and a network device for controlling access to switch ports in a communication network, in another embodiment of the disclosure.
**FIG. 6** illustrates a flowchart of an exemplary method for controlling access to switch ports in a communication network, in an embodiment of the disclosure; and
**FIGs. 7A - 7C** illustrates a detailed flowchart of an exemplary method for controlling access to switch ports in a communication network, in an embodiment of the disclosure.

### DETAILED DESCRIPTION OF THE DRAWINGS

The following description is presented to enable a person of ordinary skill in the art to make and use the disclosure and is provided in the context of particular applications and their requirements. Various modifications to the embodiments will be readily apparent to those skilled in the art, and the generic principles defined herein may be applied to other embodiments and applications without departing from the spirit and scope of the disclosure. Moreover, in the following description, numerous details are set forth for the purpose of explanation. However, one of ordinary skill in the art will realize that the disclosure might be practiced without the use of these specific details. In other instances, well-known structures and devices are shown in block diagram form in order not to obscure the description of the disclosure with unnecessary detail. Thus, the disclosure is not intended to be limited to the embodiments shown but is to be accorded the widest scope consistent with the principles and features disclosed herein.

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

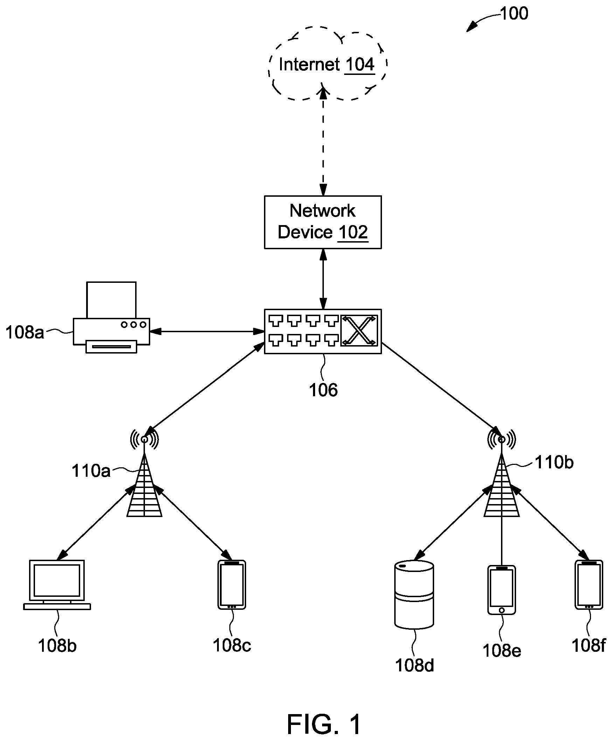

**FIG. 1** depicts a communication network 100 where a system for controlling access to switch ports may be deployed. The communication network 100 may be a Local Area Network (LAN) and may include a network device 102. The network device 102, for example, may be a router or a gateway. The network device 102 is communicatively coupled to a network switch 106 that acts as a bridge between a plurality of end-devices 108 and the network device 102. The plurality of end-devices 108 may include, but are not limited to a printer 108a, a laptop 108b, a smartphone 108c, an IOT device 108d, a mobile phone 108e, or a tablet 108f. The network switch 106 may include a plurality of switch ports (not shown in **FIG. 1****)** and may be communicatively coupled to each of the plurality of end-devices 108 through one or more of the plurality of switch ports either directly through a wired connection or via a wireless Access Points (APs) 110 (for example, a wireless AP 110a and a wireless AP 110b).

On the other side, the network device 102 may also be communicatively coupled to the internet 104. Thus, while the network switch 106 along with the plurality of end-devices 108 and the wireless APs 110 may form the LAN that is connected to the network device 102, the internet 104 may form a Wide Area Network (WAN). In other words, while the network switch 106 controls access of the plurality of end-devices 108 to the network device 102, the network device 102 further controls access of the plurality of end-devices 108 to the internet 104.

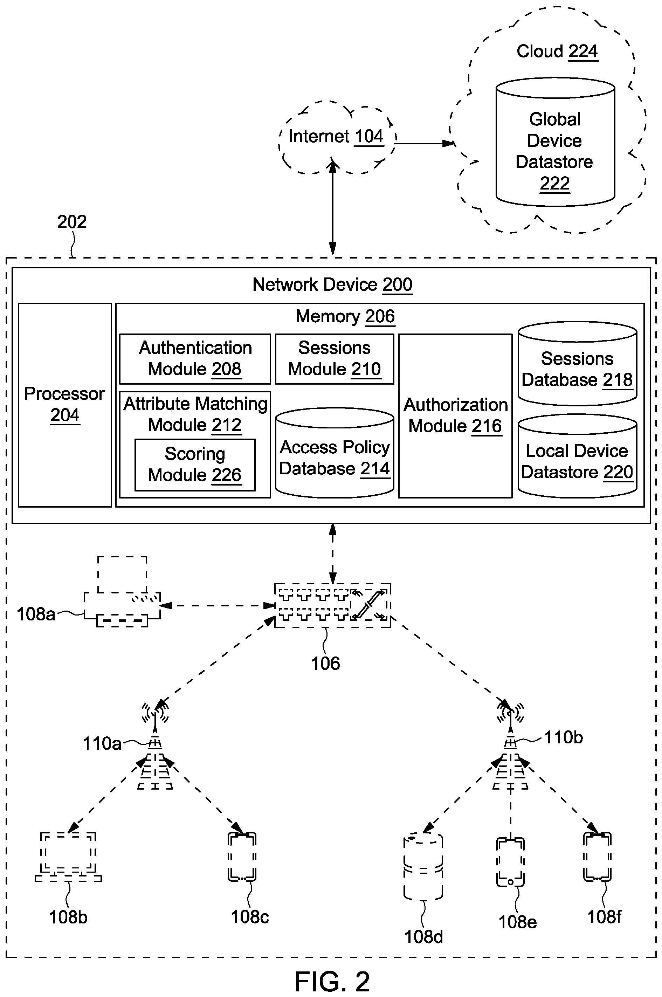

**FIG. 2** depicts a network device 200 configured to control access to switch ports in a communication network 202, in an embodiment of the disclosure. The network device 200 may be a router or a gateway that is communicably coupled to the network switch 106. When an end-device from the plurality of end-devices 108 requests access to (or is plugged into) a switch port of the network switch 106, the network device 200 may receive an authentication request associated with the end-device from the network switch 106. In other words, when the end-device from the plurality of end-devices 108 requests access to the switch port of the network switch 106, a Network Access Server (NAS) (not shown in **FIG. 2****)** on the network switch 106 then transmits an authentication request (i.e., a Radius Access Request) associated with the end-device to the network device 200. The network device 200, via a RADIUS server (not shown in **FIG. 2****),** may receive the authentication request (i.e., the Radius Access Request). The network device 200 may then process the authentication request. In other words, the network device 200, via the RADIUS server, may process the Radius Access Request. To this end, the network device 200 may include a processor 204 and a memory 206. Examples of the processor 204 may include, but are not limited to, an Intel^{®} Itanium^{®} or Itanium 2 processor(s), or AMD^{®} Opteron^{®} or Athlon MP^{®} processor(s), Motorola^{®} lines of processors, Nvidia^{®}, FortiSOC^{™} system on a chip processors or other future processors. The memory 206 may be a non-volatile memory or a volatile memory. Examples of the non-volatile memory may include but are not limited to, a flash memory, a Read Only Memory (ROM), a Programmable ROM (PROM), Erasable PROM (EPROM), and Electrically EPROM (EEPROM) memory. Examples of the volatile memory may include but are not limited to, Dynamic Random Access Memory (DRAM), and Static Random-Access memory (SRAM).

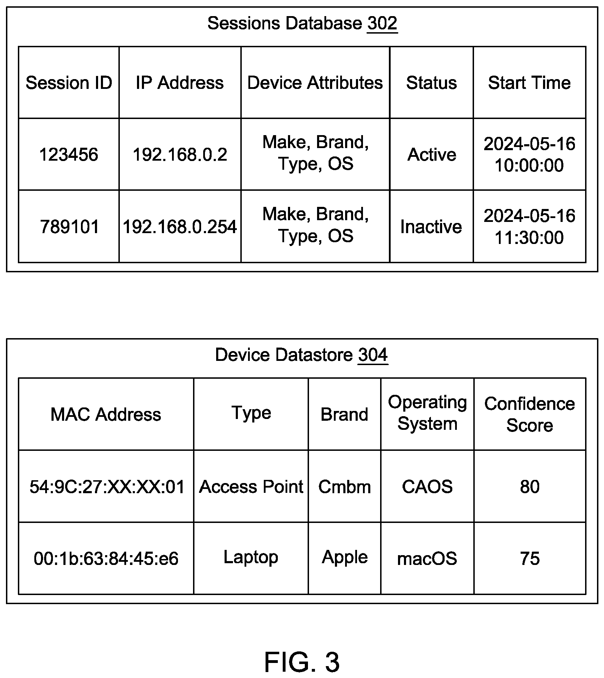

In an embodiment, the memory 206 may store instructions that, when executed by the processor 204, may cause the processor 204 to control access to switch ports, as discussed in more detail below. The memory 206 may further include an authentication module 208, a sessions module 210, an attribute matching module 212, an access policy database 214, and an authorization module 216. In some embodiments, the RADIUS server may include each of these modules 208 - 216. In some embodiments, the network device 200 may include a sessions database 218 that includes session information for one or more of the plurality of end-devices 108. The sessions database 218 may keep track of active sessions, which may be the connections or interactions between end-devices and other components within the communication network 202. An exemplary embodiment of the sessions database 218 is depicted in **FIG. 3****.**

The network device 200 may further include a local device datastore 220. The local device datastore 220 may store device attributes for the plurality of end-devices 108 mapped to respective identifiers (IDs). In an embodiment, the device attributes of an end-device may include, but are not limited to, Media Access Control (MAC) address, an identity of the end-device, a type associated with the end-device, make and brand of the end-device, Operating System (OS) used by the end-device, and the OS Version. In some embodiments, the MAC address may act as an ID for an end-device. In addition to the local device datastore 220, the network device 200 may also communicate, via the internet 104, with a global device datastore 222 that is stored on a cloud 224. The global device datastore 222 may include similar data as the local device datastore 220, but for a larger set of end-devices that includes the plurality of end-devices 108. The local device datastore 220 may be regularly updated by periodically synching with the global device datastore 222. An exemplary embodiment of the device datastore is depicted in **FIG. 3****.**

When an end-device from the plurality of end-devices 108 requests access to a switch port of the network switch 106, the network switch 106 may generate an authentication request for that end-device. The authentication request may include one or more details associated with the end-device, for example, the MAC address of the end-device. The authentication module 208 may receive the authentication request and may forward it to the sessions module 210 along with the one or more details. Using the one or more details, the sessions module 210 may determine whether an existing session associated with the end-device is present in the sessions database 218 or not. If an existing session associated with the end-device is present in the sessions database 218, the sessions module 210 may determine whether at least one device attribute associated with the end-device is available in the device datastore (which may be one of the local device datastore 220 or the global device datastore 222). Based on the availability of the at least one device attribute, the sessions module 208 may then retrieve the at least one device attribute and share it with the attribute matching module 212.

The attribute matching module 212 may further compare at least one device attribute associated with the end-device with an access policy that corresponds to the network switch 106 and the switch port. The access policy may be stored in the access policy database 214. The access policy, for example, may include details related to make, brand, or type of end-devices that can access a specific switch port of the network switch 106. It may be noted that the access policy database 214 may store access policies associated with multiple such network switches that are communicatively coupled to the network device 200. These access policies may be regularly updated by an administrator.

The attribute matching module 212 may send a result of comparing the at least one device attribute with the access policy to the authorization module 216. The result may be that the at least one device attribute match with the access policy. Alternatively, the result may be that the at least one device attribute do not match or partially match with the access policy. Accordingly, based on the result, the authorization module 216 may transmit an authorization instruction associated with the end-device and the switch port to the network switch 106. In other words, based on the result, the network device 200, via the RADIUS server, may transmit the authorization instruction associated with the end-device and the switch port to the network switch 106. The authorization instruction may be to allow the end-device access to the switch port when the at least one device attribute match with the access policy. Alternatively, authorization instruction may be to deny the end-device access to the switch port when the at least one device attribute do not match or only partially match with the access policy.

In some embodiments, before comparing the at least one device attribute with the access policy, a scoring module 226 within the attribute matching module 212 may compute a confidence score for the at least one device attribute and may compare the confidence score with a predefined threshold score. The confidence score is an indication of the accuracy and exhaustiveness of the device attributes available for a given end-device. If the confidence score is greater than or equal to the predefined threshold score, the attribute matching module 212 may match the at least one device attribute with the access policy associated with the switch port. If the confidence score is less than the predefined threshold score, the attribute matching module 212 may send a notification to the administrator. The notification may include details related to the at least one device attribute and the access policy for the network switch 106. Based on the received details, the administrator may send a message to the authorization module 216 as to whether the at least one device attribute match or do not match with the access policy. Accordingly, as explained before, the authorization module 216 may transmit an authorization instruction associated with the end-device and the switch port to the network switch 106.

In one scenario, the sessions module 210 may determine that an existing session associated with the end-device is not present in the sessions database 218. In this case, the authentication module 208 may first transmit authorization instruction to allow the end-device access to the switch port of the network switch 106. In other words, the network device 200 via, the RADIUS server, may transmit the authorization instruction to allow the end-device access to the switch port of the network switch 106. Accordingly, the network switch 106 may allow the end-device to access the switch port. Thereafter, the sessions module 210 may create a new session for the end-device. In other words, the network device 200, via the RADIUS server, may create the new session for the end-device. The end-device may be allocated an Internet Protocol (IP) address under Dynamic Host Configuration Protocol (DHCP) and at least one device attribute of the end-device may also be requested and subsequently retrieved (for example, under DHCP options 55 and 60). The sessions module 210 may also store these retrieved at least one device attributes in the sessions database 218.

Once the at least one device attributes are available, as explained before, the attribute matching module 212 may compare the at least one device attribute with the access policy associated with the network switch 106 and the switch port. In other words, the network device 200, via the RADIUS server, may compare the at least one device attribute with the access policy associated with the network switch 106 and the switch port. The attribute matching module 212 may send a result of comparing the at least one device attribute with the access policy to the authorization module 216. The result may be that the at least one device attribute match with the access policy. Alternatively, the result may be that the at least one device attribute does not match with the access policy. Accordingly, based on the result, the authorization module 216 may transmit a change of authorization instruction associated with the end-device connected to the network switch 106. In other words, based on the result, the network device 200, via the RADIUS server, may transmit the RADIUS CoA message associated with the end-device connected to the network switch 106. The change of authorization instruction may be to deny the end-device access to the switch port when the at least one device attribute do not match or partially match with the access policy. Alternatively, authorization instruction may be to allow the end-device continued access to the switch port when the at least one device attribute match with the access policy.

**FIG. 3** depicts data stored in a sessions database 302 and a device datastore 304 associated with the network device 200, in an embodiment of the disclosure. The sessions database 302 may be analogous to the sessions database 218, while the device datastore 304 may be the local device datastore 220 or the global device datastore 222.

The sessions database 302 may include device session details associated with the plurality of end-devices 108. For a given end-device, the session details may include, but are not limited to a session ID that is mapped to IP address allocated to the end-device, one or more device attributes of the end-device, current status of the session of the end-device, and the start time of the current session. For ease of depiction, the sessions database 302 includes details for two end-devices. It will be apparent from **FIG. 3** that the current session of the end-device with session ID: '123456' is currently active, while the current session of the end-device with session ID: '789101' is currently inactive.

The device datastore 304 may store various device attributes for the plurality of end-devices 108 along with a confidence score associated with device attributes of a respective end-device. The confidence score is an indication of the accuracy and exhaustiveness of the device attributes for a given end-device. The device attributes for a given end-device, for example, may include MAC address of the end-device, make of the end-device, brand of the end-device, a type associated with the end-device, OS running on the end-device, and the OS version. For ease of depiction, device attributes mapped to respective confidence scores is provided for two end-devices in **FIG. 3****.** As depicted, a first end-device with MAC address "54:9C:27:XX:XX:01" is mapped to the following device attributes: Type - AP, Brand - Cmbm, OS - CAOS; and the confidence score of 80. Similarly, a second end-device with MAC address "00:1b:63:84:45:e6" is mapped to the following device attributes: Type - Laptop, Brand - Apple, OS - MacOS; and the confidence score of 75. The MAC address may act as a unique ID for a given end-device to extract device attributes associated with that end-device from the device datastore 304.

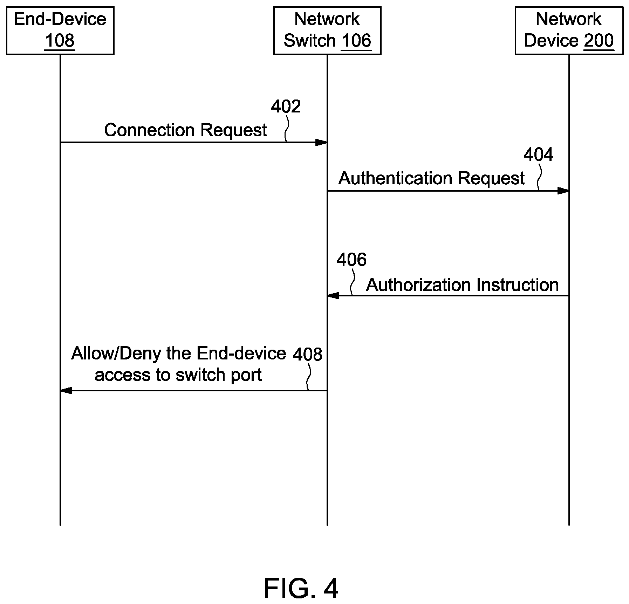

**FIG. 4** is a flow diagram depicting communication flow between the end-device 108, the network switch 106, and the network device 200 for controlling access to switch ports in a communication network, in an embodiment of the disclosure. **FIG. 4** is explained in conjunction with **FIG. 2****.** In this embodiment, the end-device 108 has an existing session with details of the session stored in the sessions database 218.

The network switch 106 may receive 402 a connection request from the end-device 108 to connect to a switch port of the network switch 106. The network switch 106 may then transmit 404 an authentication request associated with the end-device to the network device 200. In other words, the network switch 106 may then transmit a RADIUS Access Request associated with the end-device to the network device 200 via the RADIUS server. As already explained in **FIG. 2****,** the network device 200 may retrieve at least one device attribute associated with the end-device and compare these with the access policy associated with the network switch 106 and the switch port. In other words, the network device 102, via the RADIUS server, may retrieve the at least one device attribute associated with the end-device and compare these with the access policy associated with the network switch 106 and the switch port. Accordingly, the network device 200 may transmit 406 an authorization instruction to the networks switch 106. In other words, the network device 200, via the RADIUS server, may transmit the authorization instruction to the network switch 106. The authorization instruction may be to allow the end-device 108 access to the switch port when the at least one device attribute match with the access policy. Alternatively, authorization instruction may be to deny the end-device 108 access to the switch port when the at least one device attribute does not match or partially matches with the access policy. Based on the authorization instructions received from the network device 200, the network switch 106 may allow or deny 408 the end-device 108 access to the switch port.

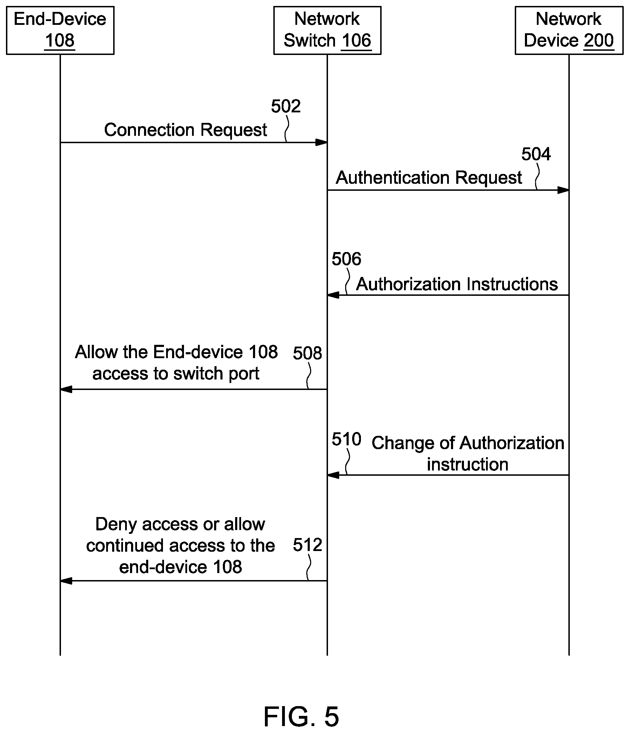

**FIG. 5** is a flow diagram depicting communication flow between the end-device 108, the network switch 106, and the network device 200 for controlling access to switch ports in a communication network, in another embodiment of the disclosure. **FIG. 5** is explained in conjunction with **FIG. 2****.** In this embodiment, the end-device 108 does not have an existing session and thus there are no session details for the end-device 108 in the sessions database 218.

The network switch 106 may receive 502 a connection request from the end-device 108 to connect a switch port of the network switch 106. In response to the connection request, the network switch 106 may transmit 504 an authentication request associated with the end-device to the network device 200. In other words, in response to the connection request, the network switch 106 may transmit a Radius Access Request associated with the end-device to the network device 200 via the RADIUS server. The network device 200 may then determine that an existing session associated with the end-device is not present in the sessions database 218. Accordingly, the network device 200 may transmit 506 an authorization instruction to allow the end-device to access the switch port of the network switch 106. In other words, the network device 200, via the RADIUS server, may transmit the authorization instruction to allow the end-device to access the switch port of the network switch 106. Based on the authorization instruction, the network switch 106 may allow 508 the end-device 108 to access the switch port. The network device 200 may also create a session for the end-device 108 and in the process may retrieve at least one device attribute associated with the end-device 108. This has already been explained in detail in conjunction with **FIG. 2****.**

The network device 200 may compare the at least one device attribute with the access policy associated with the network switch 106 and the switch port. In other words, the network device 200, via the RADIUS server, may compare the at least one device attribute with the access policy associated with the network switch 106 and the switch port. Accordingly, the network device 200 may transmit 510 a change of authorization instruction to the network switch 106. In other words, the network device 200, via the RADIUS server, may transmit the RADIUS CoA message to the network switch 106. The change of authorization instruction may be to deny the end-device 108 access to the switch port when the at least one device attribute does not match with the access policy. Alternatively, the change of authorization instruction may be to allow the end-device 108 continued access to the switch port when the at least one device attribute match with the access policy. Based on the change of authorization instruction, the network switch 106 may deny 512 access or allow 512 continued access of the switch port to the end-device.

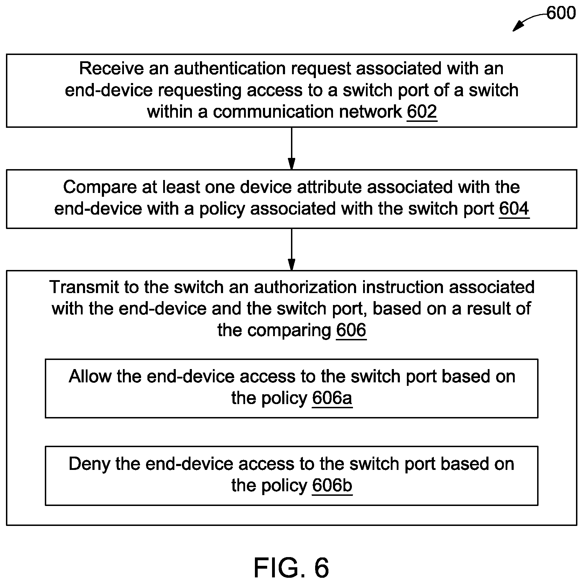

FIG. 6 illustrates a flowchart of an exemplary method for controlling access to switch ports in a communication network, in an embodiment of the disclosure. **FIG. 6** is explained in conjunction with **FIG. 2****,** **FIG. 4****,** and **FIG. 5****.** At step 602, the network device 200 may receive an authentication request associated with the end-device 108. In other words, the network device 200, via the RADIUS server, may receive the authentication request (i.e., RADIUS Access Request) associated with the end-device 108. The end-device 108 may be requesting access to a switch port of a switch within the communication network. The switch may be the network switch 106. At step 604, the network device 200 may compare at least one device attribute associated with the end-device 108 with an access policy associated with the switch port. In other words, the network device 200 via the RADIUS server, may compare the at least one device attribute associated with the end-device 108 with an access policy associated with the switch port. The at least one device attribute may include, but are not limited to MAC address, an identity of the end-device 108, a type associated with the end-device 108, make and brand of the end-device 108, OS used by the end-device 108, and the OS version. A result of the comparison may be that the at least one device attribute may match with the access policy. Alternatively, a result of the comparison may be that the at least one device attribute may not match with the access policy or may partially match with the access policy.

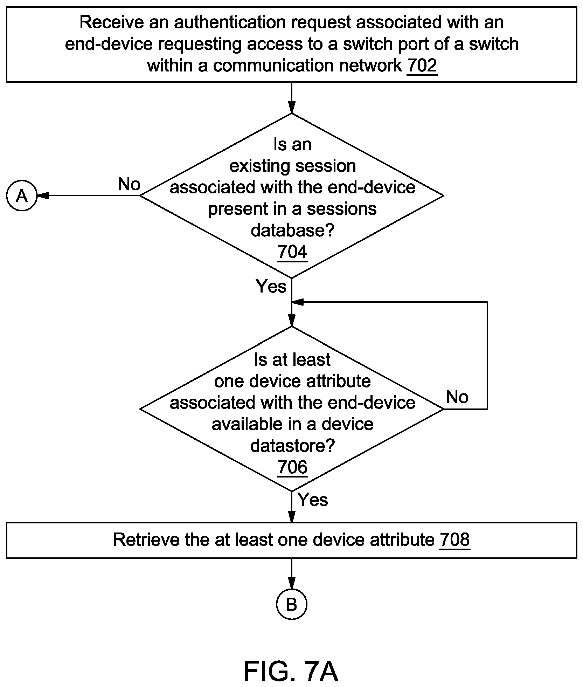

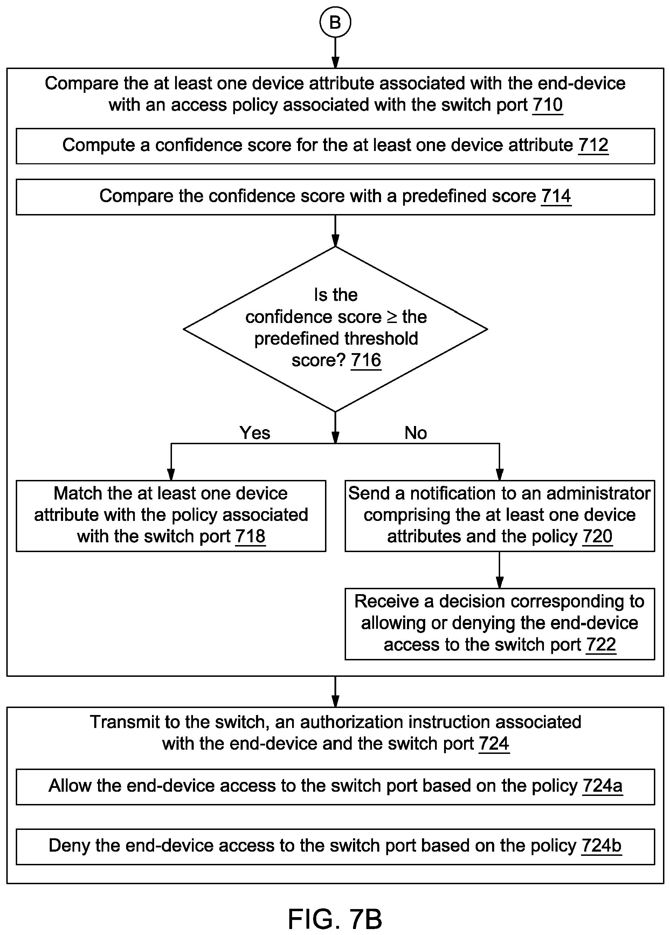

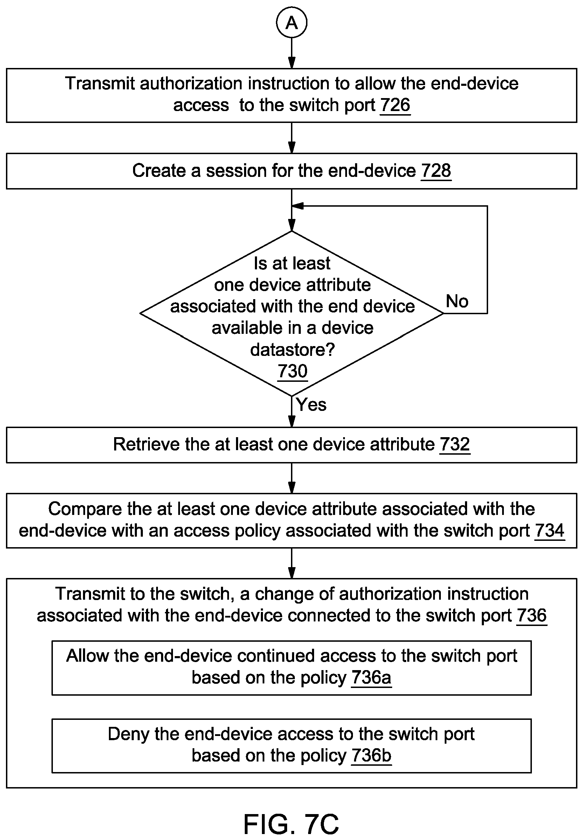

Based on the result of the comparison, the network device 200, at step 606 may transmit an authorization instruction associated with the end-device 108 and the switch port to the network switch 106. In other words, based on the result of the comparison, the network device 200, via the RADIUS server, may transmit the authorization instruction associated with the end-device 108 and the switch port to the network switch 106. The authorization instruction may be to allow, at step 606a, the end-device 108 access to the switch port if the at least one device attribute match with the access policy. Alternatively, the authorization instruction may be to deny, at step 606b, the end-device 108 access to the switch port if the at least one device attribute does not match or may have a partial match with the access policy. This is further explained in detail in conjunction with FIGs. 7A - 7C.

**FIGs. 7A - 7C** illustrate a detailed flowchart of an exemplary method for controlling access to switch ports in a communication network, in another embodiment of the disclosure. At step 702, the network device 200 may receive an authentication request associated with the end-device 108. In other words, the network device 200, via the RADIUS server, may receive the authentication request (i.e., RADIUS Access Request) associated with the end-device 108. The end-device 108 may request access to a switch port of the network switch 106 within the communication network.

At step 704, the network device 200 may perform a check to determine if an existing session associated with the end-device 108 is present in the sessions database 218 or not. The sessions database 218 may include session information for various end-devices in the communication network. The sessions database 218 may keep track of active sessions, which may be the connections or interactions between end-devices and other network devices within the communication network over a given period.

If the existing session associated with the end-device 108 is present in the sessions database 218, the network device 200, at step 706, may further perform a check to determine if at least one device attribute associated with the end-device 108 is available in the device datastore or not. The device datastore may be one of the local device datastore 220 or the global device datastore 222. Based on the availability of the at least one device attribute, the network device 200, at step 708, may retrieve the at least one device attribute.

Thereafter, at step 710, the network device 200 may compare the at least one device attribute with an access policy associated with the switch port. In other words, the network device 200, via the RADIUS server, may compare the at least one device attribute with the access policy associated with the switch port. In some embodiments, in order to compare the at least one device attribute, the network device 200, at sub-step 712, may compute a confidence score for the at least one device attribute. The network device 200, at sub-step 714, may further compare the confidence score with a predefined threshold score. Thereafter, at sub-step 716, the network device 200 may perform a check to determine whether the confidence score is greater than or equal to the predefined threshold score. If the confidence score is greater than or equal to the predefined threshold score, the network device 200, at sub-step 718, may match the at least one device attribute with the access policy associated with the switch port. A result of the comparison may be that the at least one device attribute may match with the access policy. Alternatively, a result of the comparison may be that the at least one device attribute may not match with the access policy or may have a partial match with the access policy. However, if the confidence score is less than the predefined threshold score, the network device 200, at sub-step 720, may send a notification to an administrator. The notification may include details of the at least one device attribute and the access policy. Further at sub-step 722, the network device 200 may receive a decision from the administrator as to whether the end-device 108 should be allowed or denied access to the switch port.

Thereafter, based on the result of the comparing performed at step 710, the network device 200, at step 724, may transmit an authorization instruction associated with the end-device 108 and the switch port to the network switch 106. In other words, the network device 200, via the RADIUS server, may transmit the authorization instruction associated with the end-device 108 and the switch port to the network switch 106. The authorization instruction may be to allow, at step 724a, the end-device 108 access to the switch port. Alternatively, the authorization instruction may be to deny, at step 724b, the end-device 108 access to the switch port.

Referring back to step 704, if the existing session associated with the end-device is not present in the sessions database 218, the network device 200, at step 726, may initially transmit authorization instruction to allow the end-device 108 access to the switch port of the network switch 106. In other words, the network device 200, via the RADIUS server, may initially transmit the authorization instruction to allow the end-device 108 access to the switch port of the network switch 106. Based on the authorization instruction, the network switch 106 may allow the end-device 108 access to the switch port. Thereafter, the network device 200, at step 728, may create a new session for the end-device 108. In other words, the network device 200, via the RADIUS server, may create the new session for the end-device 108. In the process of creating the new session, at least one device attributes associated with the end-device 108 may also be retrieved from the end-device 108 and may be stored in the device datastore. The network device 200, at step 730, may further perform a check to determine whether at least one device attribute associated with the end-device 108 is available in the device datastore. If the at least one device attribute is not available, the control may move back to the step 730. However, if the at least one device attribute associated with the end-device 108 is available in the device datastore, the network device 200, at step 732, may retrieve the at least one device attribute.

Thereafter, the network device 200, at step 734, may compare the at least one device attribute with an access policy associated with the switch port. In other words, the network device 200, via the RADIUS server, may compare the at least one device attribute with the access policy associated with the switch port. The step of comparing has already been explained in detail in conjunction with the step 710. Based on a result of the comparing, the network device 200, at step 736, may transmit to the network switch 106, a change of authorization instruction associated with the end-device 108 connected to the switch port. In other words, based on the result of the comparing, the network device 200, via the RADIUS server, may transmit to the network switch 106, the RADIUS CoA message associated with the end-device 108 connected to the switch port. The change of authorization instruction may be to deny, at step 736a, the end-device 108 access to the switch port. Alternatively, the change of authorization instruction may be to allow, at step 736b, the end-device 108 continued access to the switch port.

As will be appreciated by those skilled in the art, the techniques described in the various embodiments discussed above are not routine, or conventional, or well understood in the art.

Conventional port security techniques restrict port access based on a specified list of MAC addresses. This port security feature is effective only when the port needs to be locked to few end-devices. However, it does not scale well when an administrator wants to ensure the port is used only by a certain type and make of equipment. For example, if an administrator wants to ensure that only APs or more specifically APs of specific brands may connect to a port, the existing MAC address-based security solutions are insufficient.

The techniques discussed in the present disclosure for controlling access to switch ports in communication networks address these challenges by comparing device attributes of end-devices with an access policy to access the switch ports and further transmitting an authorization instruction to the switch. The authorization instructions may either allow or deny the access based on the policy comparison, thereby addressing the problems present in the conventional solutions.

The disclosed techniques firstly determine whether a session associated with an end-device exists or not in a sessions database. If a session exists, the network device retrieves device attributes from a datastore and compares them with an access policy. If no session exists, the network device temporarily grants access, creates a session, and then performs the attribute checks. Following this, the network device again compares attributes with the access policy, making the final decision to either grant or deny access based on the result. A change of authorization instruction is then transmitted to the network switch to implement the access decision.

The above embodiments are to be understood as illustrative examples of the disclosure. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the disclosure, which is defined in the accompanying claims.

It will be appreciated that, for clarity purposes, the above description has described embodiments of the disclosure with reference to different functional units and processors. However, it will be apparent that any suitable distribution of functionality between different functional units, processors or domains may be used without detracting from the disclosure. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Although the present disclosure has been described in connection with some embodiments, it is not intended to be limited to the specific form set forth herein. Rather, the scope of the present disclosure is limited only by the claims. Additionally, although a feature may appear to be described in connection with particular embodiments, one skilled in the art would recognize that various features of the described embodiments may be combined in accordance with the disclosure.

Furthermore, although individually listed, a plurality of means, elements or process steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather the feature may be equally applicable to other claim categories, as appropriate.

## Claims

1. A method for controlling access to switch ports in communication networks, the method comprising:
receiving, by a network device, an authentication request associated with an end-device requesting access to a switch port of a switch within a communication network;
comparing, by the network device, at least one device attribute associated with the end-device with an access policy associated with the switch port; and
transmitting to the switch, by the network device, an authorization instruction associated with the end-device and the switch port, based on a result of the comparing, wherein the authorization instruction comprises one of:
allowing the end-device access to the switch port based on the access policy; and
denying the end-device access to the switch port based on the access policy.

2. The method of claim 1, further comprising:
determining, by the network device, availability of the at least one device attribute associated with the end-device in a device datastore; and
retrieving, by the network device, the at least one device attribute, when the at least one device attribute is available in the device datastore.

3. The method of claim 1 or claim 2, further comprising determining, by the network device, presence of an existing session associated with the end-device in a sessions database.

4. The method of claim 3, wherein the comparing comprises:
computing, by the network device, a confidence score for the at least one device attribute, when the existing session associated with the end-device is present in the sessions database; and
comparing, by the network device, the confidence score with a predefined threshold score.

5. The method of claim 4, further comprising matching, by the network device, the at least one device attribute with the access policy associated with the switch port, when the confidence score is greater than or equal to the predefined threshold score.

6. The method of claim 4 or claim 5, further comprising:
sending, by the network device, a notification to an administrator comprising the at least one device attribute and the access policy, when the confidence score is below the predefined threshold score; and
receiving, from the administrator, a decision corresponding to allowing or denying the end-device access to the switch port.

7. The method of any one of claims 2 to 6, further comprising:
creating, by the network device, a session for the end-device in absence of an existing session associated with the end-device in the sessions database, wherein the authorization instruction transmitted to the switch comprises allowing the end-device access to the switch port;
determining, by the network device, availability of the at least one device attribute associated with the end-device; and
retrieving, by the network device, the at least one device attribute, when the at least one device attribute is available.

8. The method of claim 7, further comprising transmitting to the switch, by the network device, a change of authorization instruction associated with the end-device connected to the switch port, based on a result of the comparing, wherein the change of authorization instruction comprises:
denying the end-device access to the switch port based on the access policy; and
allowing the end-device continued access to the switch port based on the access policy.

9. The method of any preceding claim, wherein the at least one device attribute comprises at least one of Media Access Control (MAC) address, an identity of the end-device, a type associated with the end-device, make and brand of the end-device, Operating System (OS) used by the end-device, and the OS Version.

10. A network device comprising:
a processor; and
a memory communicably coupled to the processor and comprising processor instructions that when executed by the processor, cause the processor to:
receive an authentication request associated with an end-device requesting access to a switch port of a switch within a communication network;
compare at least one device attribute associated with the end-device with an access policy associated with the switch port; and
transmit to the switch, an authorization instruction associated with the end-device and the switch port, based on a result of the comparison, wherein the authorization instruction comprises one of:
allow the end-device access to the switch port based on the access policy; and
deny the end-device access to the switch port based on the access policy.

11. A system for controlling access to switch ports in communication networks, the system comprising:
a set of switches in a communication network, wherein each of the set of switches comprise a plurality of switch ports; and
a gateway communicably coupled to the set of switches, wherein the gateway comprising:
a processor; and
a memory communicably coupled to the processor and comprising processor instructions that when executed by the processor, cause the processor to:
receive an authentication request associated with an end-device requesting access to a switch port of a switch from the set of switches;
compare at least one device attribute associated with the end-device with an access policy associated with the switch port; and
transmit to the switch, an authorization instruction associated with the end-device and the switch port, based on a result of the comparison, wherein the authorization instruction comprises one of:
allow the end-device access to the switch port based on the access policy; and
deny the end-device access to the switch port based on the access policy.

12. The system of claim 16, wherein the processor instructions further cause the processor to:
determine availability of the at least one device attribute associated with the end-device in a device datastore; and
retrieve the at least one device attribute, when the at least one device attribute is available in the device datastore.

13. The system of claim 11 or claim 12, wherein the processor instructions further cause the processor to determine presence of an existing session associated with the end-device in a sessions database.

14. The system of claim 13, wherein to compare, the processor instructions further cause the processor to:
compute a confidence score for the at least one device attribute, when the existing session associated with the end-device is present in the sessions database; and
compare the confidence score with a predefined score.

15. The system of any one of claims 11 to 14, wherein the switch is configured to:
send the authentication request to the gateway;
receive the authorization instruction from the gateway; and
perform one of:
allow the end-device to access the switch port; and
block the end-device from accessing the switch port.
